# EUROPEAN PATENT APPLICATION

(11) **EP 1 375 991 A1**
(43) Date of publication of application: **02.01.2004**
(21) Application number: 03011813.7
(22) Date of filing: 26.05.2003
(51) Int. Cl.: F16L 11/12

(54) **Tube construction for agricultural use**

(30) Priority: 19.06.2002 IT MI20020323 U
(71) Applicant: MERLETT TECNOPLASTIC s.p.a., 21020 Daverio (Varese) (IT)
(72) Inventor: Tamborini, Ariberto, 21020 Daverio (Varese) (IT)
(74) Representative: Cicogna, Franco

(57) **Abstract**

A tube construction (1), specifically designed for agricultural use, comprises an inner tubular element (2) covered by a crossed fiber layer (3), arranged in an outer tubular element (4), and being characterized in that said tube construction further comprises at least a co-extruded larger thickness longitudinal band (5,6), made of a material resistant to crushing and wear.

The band (5,6) is applied at the crushed sides of the tube.

## Description

### BACKGROUND OF THE INVENTION

The present invention relates to a tube construction, specifically designed for agricultural use.

As is known, in the agricultural field are conventionally used, for irrigation purposes, flat irrigating sleeves, usually made of a PVC material, which are made by providing a tube element, and then crushing said tube element to provide a flat configuration as required for easily rolling the product, and for reducing the size thereof.

Because of an exposition to the atmospheric agents, in particular to the sun, and because of a natural ageing of the tube, the crushed edges thereof tend to be slitted, or cut through along the longitudinal folds.

### SUMMARY OF THE INVENTION

Accordingly, the aim of the present invention is to provide a tube or pipe construction which is improved over prior art like tube constructions.

Within the scope of the above mentioned aim, a main object of the present invention is to provide such a tube construction adapted to prevent the crushed edges thereof from being prematurely deteriorated, so as to greatly extend the useful life of the tube products.

Another object of the present invention is to provide such a tube construction which can be made with a very low cost, comparable to that of conventional like tube constructions.

Yet another object of the present invention is to provide such a tube construction which can be easily made by existing making systems and methods.

According to one aspect of the present invention, the above mentioned aim and objects as well as yet other objects, which will become more apparent hereinafter, are achieved by a tube construction, specifically designed for agricultural use, comprising an inner tubular element covered by a cross-fiber layer, in turn included in an outer tubular element, characterized in that said tube construction further comprises at least a co-extruded longitudinal band made of a material resistant against crushing and wearing.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:

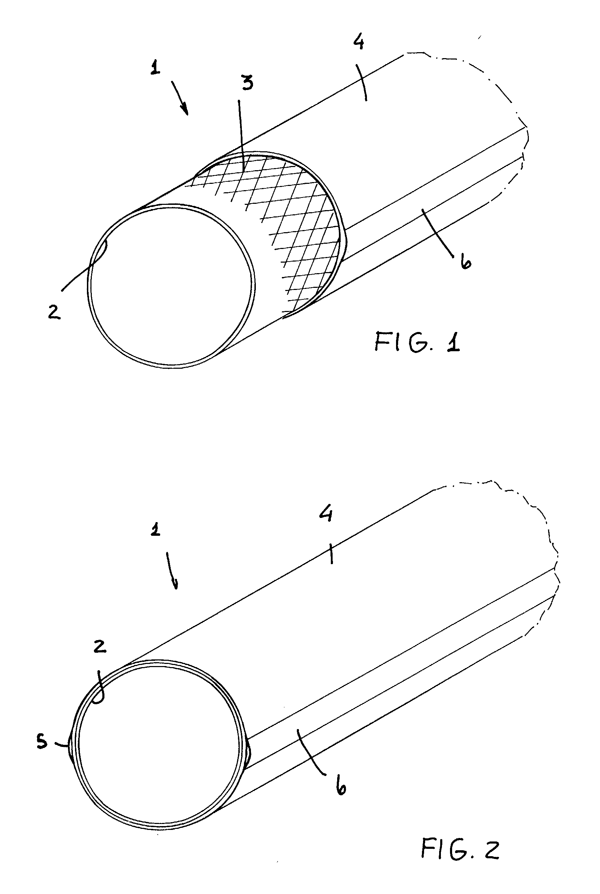

Figure 1 is a broken-away perspective view of a portion of a tube or pipe construction according to the present invention;
Figure 2 is a further perspective view of the portion of the tube construction according to the invention;

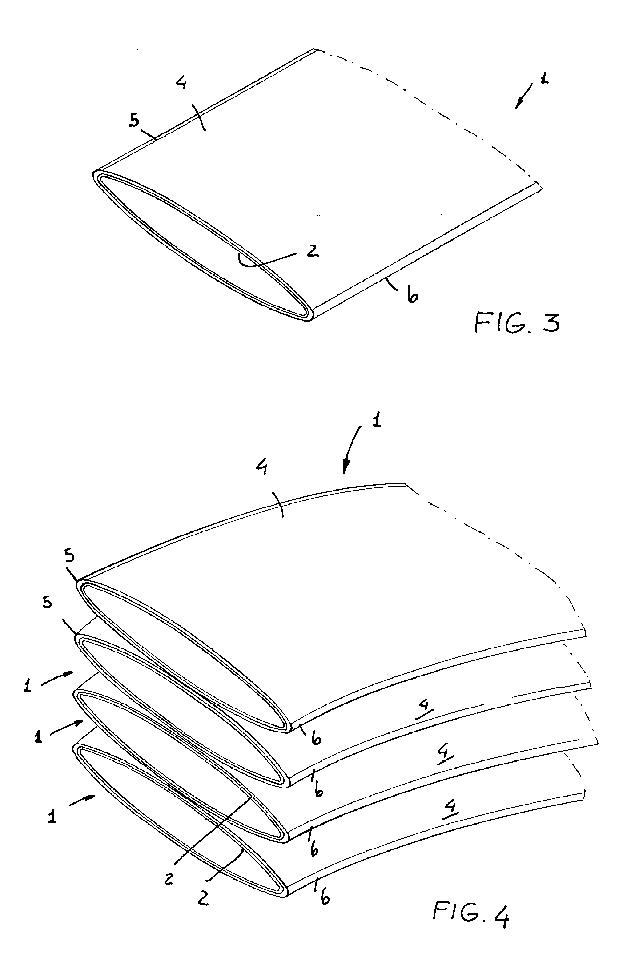

Figure 3 is a further perspective view of a length of said tube construction, being shown in a crushed condition thereof;
Figure 4 is a further perspective view schematically illustrating a winding system for winding the tube construction according to the present invention, in a crushed conditon thereof;

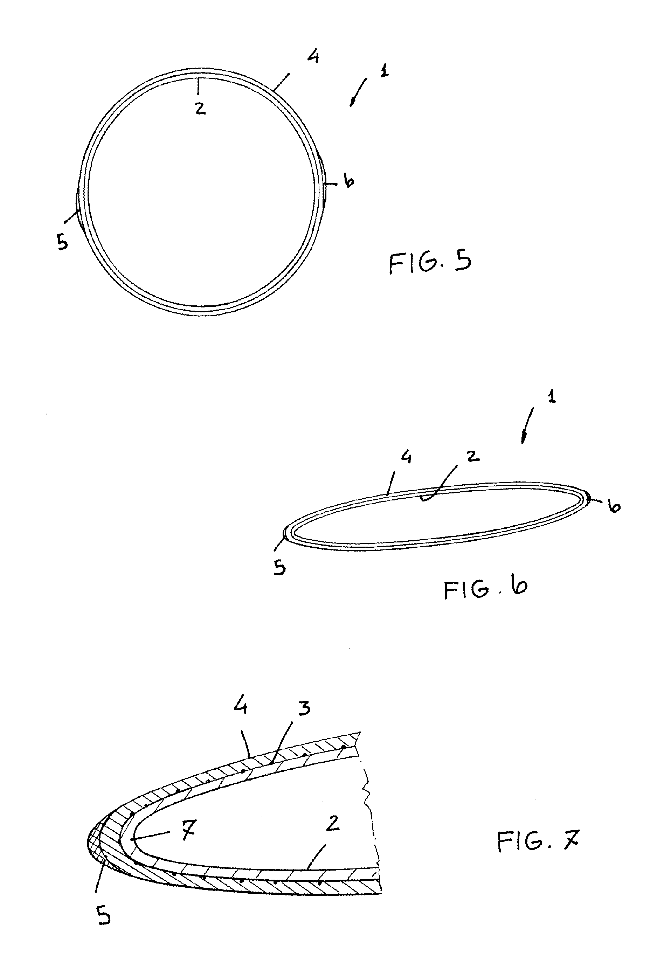

Figure 5 is a front view illustrating the subject tube or pipe construction;
Figure 6 is a view similar to figure 5, but showing the tube construction in a crushed condition thereof; and
Figure 7 is an enlarged partial cross-sectional view of the tube construction according to the invention.

### DESCRIPTION OF THE PREFERRED EMBODIMENT

With reference to the number references of the above mentioned figures, the tube construction according to the present invention, generally indicated by the reference number 1, comprises an inner tubular element 2, covered by a crossed-fiber layer 3, in turn arranged in an outer tubular element 4.

The subject tube construction, in particular, is made by co-extruding the inner and outer tubular elements, while simultaneously applying the mentioned crossed fibers, in a per se known manner.

According to the invention, during the extruding process of the tube, are co-extruded two side reinforcement longitudinal bands, respectively indicated by the reference numbers 5 and 6, which are advantageously made of a material resisting against crushing and wearing.

More specifically, said longitudinal bands 5 and 6 are made at diametrically opposite positions, coinciding with the directrix line therealong the tube construction will be crushed or pressed to a flattened configuration.

The mentioned longitudinal reinforcement bands can be formed both on the outer tubular element 4 and/or on the inner tubular element 2.

The material used for making said longitudinal reinforcement bands is, advantageously, a polyurethane material or other technical polymeric material having like mechanical strength properties, so as to make the region affected by the longitudinal bands greatly resistant against crushing and wearing.

The provision of the mentioned outer and/or inner reinforcement bands allows to greatly reduce the cost of the finished product, since the polyurethane or other comparatively expensive material is applied only at that regions where the wear would be comparatively high, i.e. along the folded edges of the tube construction.

It has been found that the invention fully achieves the intended aim and objects.

In fact, the invention provides a tube construction having a longer useful life, while holding the making cost thereof comparatively low.

In practicing the invention, the used materials, as well as the contingent size and shapes, can be any, depending on requirement and the status of the art.

## Claims

1. A tube construction, specifically designed for agricultural use, comprising an inner tubular element covered by a cross-fiber layer, in turn included in an outer tubular element, **characterized in that** said tube construction further comprises at least a co-extruded longitudinal band made of a material resistant against crushing and wearing.

2. A tube construction, according to Claim 1, **characterized in that** said tube construction comprises at least two longitudinal greater thickness bands, provided at diametrically opposite positions coinciding with the directrix lines therealong the tube construction must be folded.

3. A tube construction, according to Claim 1 or 2, **characterized in that** said longitudinal reinforcement bands are made on the outer tubular element.

4. A tube construction, according to one or more of the preceding claims, **characterized in that** said longitudinal reinforcement bands are made on the inner tubular element.

5. A tube construction, according to one or more of the preceding claims, **characterized in that** said longitudinal reinforcement bands are made of a polyurethane material.

6. A tube construction, according to one or more of the preceding claims, **characterized in that** said longitudinal reinforcement bands are made of a technical-use polymeric material.

7. A tube construction, according to one or more of the preceding claims, **characterized in that** said tube construction comprises one or more of the disclosed and/or illustrated characteristics.
